# EUROPÄISCHE PATENTANMELDUNG

(11) **EP 0 731 342 A2**
(43) Veröffentlichungstag der Anmeldung: **11.09.1996**
(21) Anmeldenummer: 96102930.3
(22) Anmeldetag: 28.02.1996
(51) Int. Cl.: G01F 23/22

(54) **Verfahren zur Überwachung des Flüssigkeitsstandes in einem Behälter**

(30) Priorität: 07.03.1995 DE 19507891
(71) Anmelder: GESTRA AG, D-28215 Bremen (DE)
(72) Erfinder: Politt, Joachim-Christian, Dr., 28215 Bremen (DE); Schröter, Holger, 28832 Achim (DE); Borchers, Kerstin, 28307 Bremen (DE)
(74) Vertreter: Eisenführ, Speiser & Partner

(57) **Zusammenfassung**

In Einsatzfällen, in denen die kritische Temperatur auftritt oder auftreten könnte, war bislang eine sichere Überwachung des Flüssigkeitsstandes nicht möglich, da sich die physikalischen Eigenschaften der Flüssigkeit und des darüber befindlichen gasförmigen Mediums im Behälter dann nicht mehr unterscheiden. Das neue Verfahren bezieht die Temperatur im Behälter mit in die Überwachung des Flüssigkeitsstandes ein. Unterhalb eines unteren Temperatur-Vergleichswertes (Tu) bestimmt das Meßsignal des Niveausensors (1) das Ausgangssignal der Auswerteeinheit (7). Oberhalb dieses Wertes (Tu) bleibt das Meßsignal des Niveausensors (1) außer Betracht. Die Auswerteeinheit (7) gibt ein Ausgangssignal, das hinsichtlich des Flüssigkeitsstandes auf der sicheren Seite liegt. Der Temperatur-Vergleichswert (Tu) liegt soweit unterhalb der kritischen Temperatur, daß sich die Meßungenauigkeiten des Niveausensors (1) und des Temperatursensors (6) nicht störend auswirken.

## Beschreibung

Die Erfindung betrifft ein Verfahren der im Oberbegriff des Hauptanspruches spezifizierten Art zur Überwachung des Flüssigkeitsstandes in einem Behälter.

Die Füllstandserkennung von Niveausensoren basiert darauf, daß sich die physikalischen Eigenschaften der zu überwachenden Flüssigkeit und des darüber im Behälter befindlichen gasförmigen Mediums - beispielsweise elektrische Leitfähigkeit, Dielektrizitätskonstante oder Dichte, um nur einige Eigenschaften zu nennen - unterscheiden. Vielfach handelt es sich bei der Flüssigkeit und dem gasförmigen Medium im Behälter um unterschiedliche Aggregatzustände des gleichen Mediums, z. B. Speisewasser oder Kondensat als Flüssigkeit und Wasserdampf als gasförmiges Medium. Bis zu Temperaturen nahe der kritischen Temperatur eines Mediums - sie beträgt z. B. für Wasser 374, 15°C - unterscheiden sich die physikalischen Eigenschaften der flüssigen und der gasförmigen Phase des Mediums sehr deutlich voneinander, während bei der kritischen Temperatur die physikalischen Eigenschaften von flüssiger und gasförmiger Phase gleich sind. In Einsatzfällen, in denen die kritische Temperatur auftritt oder auftreten könnte, war deshalb bislang eine sichere Überwachung des Flüssigkeitsstandes nicht möglich.

Der Erfindung liegt die Aufgabe zugrunde, ein Verfahren der eingangs genannten Art zu schaffen, das auch dann ohne Sicherheitsrisiko einsetzbar ist, wenn die kritische Temperatur der zu überwachenden Flüssigkeit erreicht wird oder erreicht werden könnte.

Diese Aufgabe wird durch die im Anspruch 1 angegebenen Merkmale gelöst.

Die Temperatur im Behälter wird in die Überwachung des Flüssigkeitsstandes mit einbezogen, sie gibt Aufschluß darüber, ob Flüssigkeit und gasförmiges Medium anhand der physikalischen Eigenschaften unterscheidbar sind. Die Temperaturmessung ist aber unweigerlich mit einer Toleranz behaftet. Auch weisen die Niveausensoren Meßungenauigkeiten auf, wodurch bereits in einem begrenzten Bereich unterhalb der kritischen Temperatur eine fehlerfreie Flüssigkeitsstand-Überwachung nicht mehr möglich ist. Der Auswerteeinheit wird deshalb ein Temperatur-Vergleichswert vorgegeben, der vorzugsweise soweit unterhalb der kritischen Temperatur liegt, daß die Meßungenauigkeiten der Sensoren sich nicht störend auswirken.

Unterhalb des Temperatur-Vergleichswertes kommt das Meßsignal des Niveausensors voll zum Tragen; es bestimmt das Ausgangssignal der Auswerteeinheit. Oberhalb des Temperatur-Vergleichswertes bleibt das Meßsignal des Niveausensors außer Betracht. Die Auswerteeinheit gibt ein Ausgangssignal, das hinsichtlich des Flüssigkeitsstandes auf der sicheren Seite liegt. Bei der kritischen Temperatur ist es das Signal "Alarm", denn der Aggregatzustand des Mediums im Behälter ist dann ungewiß.

Die Unteransprüche haben besonders vorteilhafte Weiterbildungen der Erfindung zum Gegenstand.

Flüssigkeitsstand-Überwachungen werden häufig als Grenzwertkontrollen durchgeführt. Dabei ist zwischen Mindeststand- und Höchststandüberwachung zu unterscheiden. Bei einer Mindeststandüberwachung soll das Ausgangssignal "OK" lauten, solange der Flüssigkeitsstand im Behälter einen festgelegten Mindeststand übersteigt. Sobald der Flüssigkeitsstand jedoch unter den Mindeststand absinkt, erfolgt das Ausgangssignal "Alarm". Eine Mindeststandüberwachung ist z. B. in Dampfkesseln vorgeschrieben, um ein Trockenfallen des Kessels zu vermeiden. Eine Höchststandüberwachung hat demgegenüber die Aufgabe, bei einem Anstieg des Flüssigkeitsstandes über einen festgelegten Höchststand das Ausgangssignal "Alarm" zu geben. Das Ausgangssignal soll "OK" lauten, wenn sich der Flüssigkeitsstand unterhalb des Höchststandes befindet. Eine Höchststandüberwachung erfolgt z. B. in Leitungen zur Turbinenentwässerung, damit kein Kondensat in die Dampfturbine gelangt.

Bei Temperaturen oberhalb des Temperatur-Vergleichswertes erfolgt gemäß Anspruch 2 bei Mindeststandüberwachung stets das Ausgangssignal "Alarm". Dies liegt auf der sicheren Seite, denn bei der kritischen Temperatur ist der Aggregatzustand des vorhandenen Mediums ungewiß und oberhalb der kritischen Temperatur existiert das Medium ausnahmslos in gasförmigem Aggregatzustand.

Für die Höchststandüberwachung sind die Merkmale des Anspruches 3 besonders vorteilhaft. Es wird ein zweiter Temperatur-Vergleichswert vorgegeben, der soweit über der kritischen Temperatur liegt, daß trotz der Meßtoleranzen des Temperatursensors die Temperatur im Behälter mit Sicherheit über dem kritischen Punkt liegt. Bei einer Temperatur zwischen beiden Vergleichstemperaturen erfolgt das Ausgangssignal "Alarm". Der Aggregatzustand des Mediums im Behälter ist dann ungewiß. Oberhalb der zweiten, oberen Vergleichstemperatur lautet das Ausgangssignal "OK". Im Behälter ist dann zweifelsohne keine Flüssigkeit vorhanden. Somit ist auch bei Höchststandüberwachung ein optimales, auf der sicheren Seite gelegenes Ausgangssignal gewährleistet.

Wenn entsprechend Anspruch 4 der Temperatursensor in unmittelbarer Nähe des Niveausensors positioniert ist, wird die im Bereich des Niveausensors im Behälter herrschende Temperatur besonders exakt ermittelt, so daß der Niveausensor das Ausgangssignal der Auswerteeinheit bis besonders nahe an die kritische Temperatur bestimmen kann.

Das erfindungsgemäße Verfahren wird nachfolgend anhand der Zeichnung an Ausführungsbeispielen erläutert. Es zeigt
- Fig. 1: schematisiert und beispielhaft eine Einrichtung zur Überwachung des Mindeststandes einer Flüssigkeit und
- Fig. 2: schematisiert und beispielhaft eine Einrichtung zur Überwachung des Höchststandes einer Flüssigkeit.

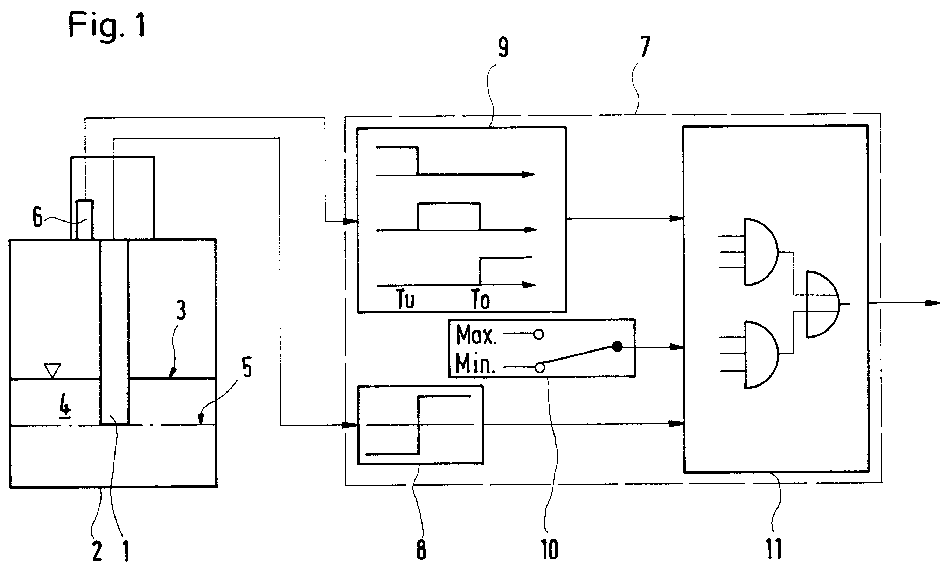

In Fig. 1 ragt eine Niveausonde 1 von oben in einen Behälter 2 hinein, z. B.in einen Hochdruck-Dampfkessel. In dem Behälter 2 soll das Niveau 3 einer Flüssigkeit 4, z. B. Wasser, darauf überwacht werden, ob es einen festgelegten Mindeststand 5 unterschreitet. Unmittelbar neben dem Niveausensor 1 ist ein Temperatursensor 6 am Behälter 2 angeordnet. Der Niveau- und der Temperatursensor 1, 6 sind zu einer Baueinheit zusammengefaßt. Eine elektronische Auswerteeinheit 7 ist vorgesehen, die einen Niveauschalter 8, einen Temperaturbewerter 9, einen Umschalter 10 und eine Logikschaltung 11 aufweist. An den Temperaturbewerter 9 ist der Temperatursensor 6 und an den Niveauschalter 8 der Niveausensor 1 angeschlossen. An dem Umschalter 10 kann zwischen "Max." und "Min.", d. h. zwischen Höchst- und Mindeststandüberwachung umgeschaltet werden, so daß die Auswerteeinheit 7 wahlweise für jede der beiden Überwachungen Verwendung finden kann. Im vorliegenden Beispiel steht der Umschalter 10 auf Mindeststandüberwachung. Die Logikschaltung 11 verarbeitet die Signale des Niveauschalters 8, des Temperaturbewerters 9 und des Umschalters 10 und bildet daraus ein Ausgangssignal, das für Meldungen oder Steuerungen genutzt werden kann.

Der Temperatursensor 6 gibt ein der Temperatur in der Nähe des Niveausensors 1 im Behälter 2 entsprechendes analoges Meßsignal an den Temperaturbewerter 9, in dem ein erster, unterer und ein zweiter, oberer Temperatur-Vergleichswert Tu, To vorgegeben sind. Der Temperaturbewerter 9 bildet binäre Schaltsignale, die angeben, ob sich die Temperatur im Behälter 2 unterhalb des unteren Vergleichswertes Tu, zwischen beiden Vergleichswerten Tu und To oder oberhalb des oberen Vergleichswertes To befindet. Der untere Vergleichswert Tu liegt soweit unter und der obere Vergleichswert To soweit über der kritischen Temperatur der Flüssigkeit 4, daß die Meßungenauigkeiten des Temperatursensors 9 und des Niveausensors 1 berücksichtigt sind. Bei dem unteren Vergleichswert Tu liegt die tatsächliche Temperatur im Behälter 2 so tief, daß vorhandene Flüssigkeit 4 vom Niveausensor 1 mit Sicherheit detektiert werden kann. Bei dem oberen Vergleichswert To liegt die Temperatur im Behälter 2 so hoch, daß in ihm zweifelsohne keine Flüssigkeit 4 vorhanden ist.

Der Niveausensor 1 gibt an den Niveauschalter 8 ein analoges Meßsignal ab. Dessen Wert hängt bei Temperaturen unterhalb von Tu davon ab, ob und ggf. wie weit der Niveausensor 1 in die Flüssigkeit 4 eingetaucht ist. Der Niveauschalter 8 erzeugt aus dem analogen Meßsignal binäre Schaltsignale mit der Bedeutung: "Flüssigkeit detektiert" oder "Keine Flüssigkeit detektiert".

Liegt die Temperatur im Behälter 2 unter dem unteren Vergleichswert Tu und liefert zugleich der Niveauschalter 8 das Schaltsignal "Flüssigkeit detektiert", dann gibt die Logikschaltung 11 das Ausgangssignal "OK". Das Schaltsignal "Keine Flüssigkeit detektiert" hat hingegen das Ausgangssignal "Alarm" zu Folge. Sollte bei einer Mindeststandüberwachung die Temperatur im Behälter 2 den unteren Vergleichswert Tu überschreiten, dann gibt die Logikschaltung 11 das Ausgangssignal "Alarm"; das Schaltsignal des Niveauschalters 8 bleibt hierbei unbeachtet. Auf diese Weise ist eine Mindeststandüberwachung der Flüssigkeit 4 bis zur Vergleichstemperatur Tu möglich, also bis nahe an die kritische Temperatur der Flüssigkeit 4. Sollte diese Temperatur überschritten werden, lautet das Ausgangssignal der Logikschaltung 11 "Alarm" und liegt auf der für die Funktionssicherheit sicheren Seite.

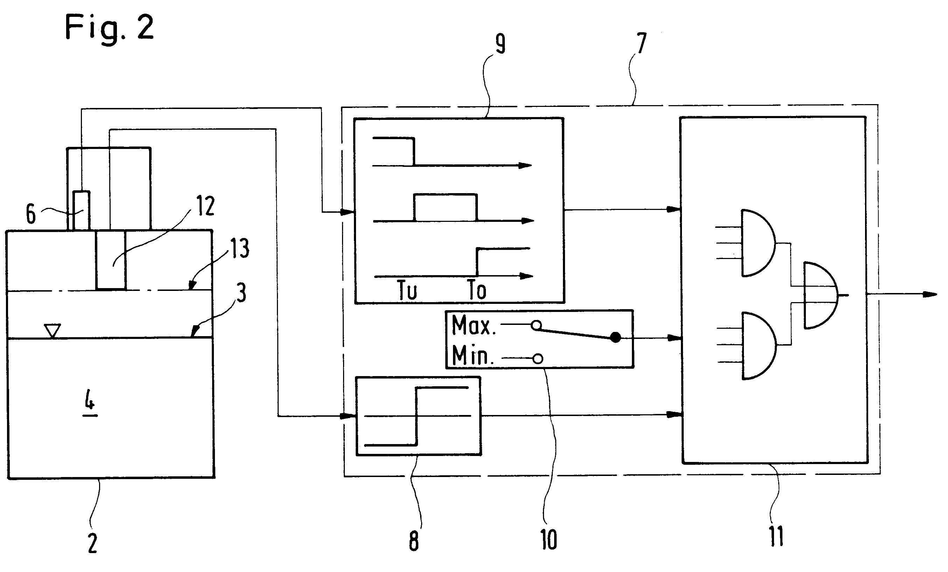

In Fig. 2 soll das Niveau 3 der Flüssigkeit 4 im Behälter 2 mittels eines Niveausensors 12 darauf überwacht werden, ob es einen festgelegten Höchststand 13 überschreitet. Der Umschalter 10 ist hierzu auf "Max.". gestellt.

Liegt die Temperatur im Behälter 2 unter dem unteren Vergleichswert Tu und das Niveau 3 der Flüssigkeit 4 unter dem Höchststand 13, dann liefert der Niveauschalter 8 das Schaltsignal "Keine Flüssigkeit detektiert". Daraufhin gibt die Logikschaltung 11 das Ausgangssignal "OK". Das Schaltsignal "Flüssigkeit detektiert" führt hingegen zu dem Ausgangssignal "Alarm". Sollte bei einer Höchststandüberwachung die Temperatur im Behälter 2 den unteren Vergleichswert Tu überschreiten, dann bleibt das Schaltsignal des Niveauschalters 8 bei der Bildung des Ausgangssignales unbeachtet. Eine zwischen dem unteren und dem oberen Vergleichswert Tu, To gelegene Temperatur führt in der Logikschaltung 11 zu dem Ausgangssignal "Alarm". Dieses ist in Anbetracht des ungewissen Aggregatzustandes des Mediums im Behälter 2 richtig. Wird der obere Vergleichswert To überschritten, dann ergeht das Ausgangssignal "OK". Da bei solchen Temperaturen keine Flüssigkeit im Behälter 2 vorhanden sein kann, ist dieses Ausgangssignal korrekt. Damit ist auch bei Höchststandüberwachung ein hohes Maß an Funktionssicherheit gewährleistet.

## Patentansprüche

1. Verfahren zur Überwachung des Flüssigkeitsstandes in einem Behälter mittels
- eines Niveausensors, der ein dem Flüssigkeitsstand entsprechendes Meßsignal abgibt, und
- einer Auswerteeinheit, die unter Bewertung des Meßsignals ein Ausgangssignal bildet,
dadurch gekennzeichnet, daß
- mittels eines Temperatursensors (6) die im Behälter (2) herrschende Temperatur ermittelt wird,
- die ermittelte Temperatur in der Auswerteeinheit (7) mit einem vorgegebenen Temperatur-Vergleichswert (Tu) verglichen wird, der unterhalb der kritischen Temperatur der zu überwachenden Flüssigkeit (4) liegt, und
- die Auswerteeinheit (7) bei einer den Vergleichswert (Tu) unterschreitenden Temperatur ein durch das Meßsignal des Niveausensors (1, 12) bestimmtes Ausgangssignal bildet, während
- die Auswerteeinheit (7) bei einer den Vergleichswert (Tu) überschreitenden Temperatur ein von der Temperatur bestimmtes Ausgangssignal bildet.

2. Verfahren nach Anspruch 1,
dadurch gekennzeichnet, daß bei Überwachung eines Mindest-Flüssigkeitsstandes die Auswerteeinheit (7) bei einer den Temperatur-Vergleichswert (Tu) überschreitenden Temperatur das Ausgangssignal "Alarm" bildet.

3. Verfahren nach Anspruch 1,
dadurch gekennzeichnet, daß bei Überwachung eines Höchst-Flüssigkeitsstandes
- die ermittelte Temperatur bei Überschreitung des Temperatur-Vergleichswertes (Tu) in der Auswerteeinheit (7) mit einem vorgegebenen zweiten Temperatur-Vergleichswert (To) verglichen wird, der oberhalb der kritischen Temperatur der zu überwachenden Flüssigkeit (4) liegt, und
- die Auswerteeinheit (7) bei einer den zweiten Temperatur-Vergleichswert (To) überschreitenden Temperatur das Ausgangssignal "OK" bildet, während
- die Auswerteeinheit (7) bei einer zwischen beiden Temperatur-Vergleichswerten (Tu, To) liegenden Temperatur das Ausgangssignal "Alarm" bildet.

4. Verfahren nach einem oder mehreren der vorhergehenden Ansprüche, dadurch gekennzeichnet, daß die Temperatur in der Nähe des Niveausensors (1, 12) ermittelt wird.
